# EUROPEAN PATENT SPECIFICATION

(11) **EP 3 253 270 B1**
(45) Date of publication and mention of the grant of the patent: **13.11.2024**
(21) Application number: 16746223.3
(22) Date of filing: 26.01.2016
(51) Int. Cl.: A47K 13/22

(54) **A DEVICE FOR AUTOMATICALLY PROVIDING A DISPOSABLE SEATING-SURFACE COVER FOR A TOILET-SEAT**
VORRICHTUNG ZUR AUTOMATISCHEN BEREITSTELLUNG EINER WEGWERFBAREN SITZOBERFLÄCHENABDECKUNG FÜR EINEN TOILETTENSITZ
DISPOSITIF POUR FOURNIR AUTOMATIQUEMENT UN REVÊTEMENT DE SURFACE D'ASSISE JETABLE POUR UN SIÈGE DE TOILETTES

(30) Priority: 05.02.2015 IL 23713115
(43) Date of publication of application: 13.12.2017
(73) Proprietor: Shimon, Eliyahu, 9548704 Jerusalem (IL)
(72) Inventor: Shimon, Eliyahu, 9548704 Jerusalem (IL)
(74) Representative: ABG Intellectual Property Law, S.L.
(86) International application number: PCT/IL2016/050080
(87) International publication number: WO 2016/125140

(56) References cited:
- EP-A1- 1 169 961
- WO-A1-88/10086
- WO-A1-99/38427
- WO-A1-99/38427
- CN-A- 101 548 859
- CN-A- 102 727 126
- CN-B- 102 273 977
- US-A- 1 237 548
- US-A- 1 589 429
- US-A- 2 243 134
- US-A- 4 213 212
- US-A- 5 561 867
- US-A- 6 038 708

## Description

### Field of the Invention

The present invention relates to the field of sanitary equipment. More particularly, the invention relates to an automatic system for providing a disposable seating-surface cover for a toilet-seat.

### Background of the invention

Sanitation has always been a problem with regard to toilet-seats, particularly in public bathrooms. Wiping the seat prior to use might be ineffective against some disease-causing organisms such as bacteria and viruses.

Several attempts have been made to address this problem. One relatively common means is the use of a circular cover which sits on the top portion of the toilet-seat, with no means of securement thereon, thus this type of cover is prone to dislocation from its initial positioning.

The reference to Hefty et al., U.S. Pat. No. 4,213,212, and to Asberg, Swedish Patent No. 87682, are essentially the same and it is believed that they can be discussed together. Both references disclose a continuous tubular toilet-seat cover that includes a supply reel and a take-up reel, the cover being fed around a round toilet-seat from back to front and then toward the back again to complete the circle. After use, the used portion is wound up on the take-up reed which in turn pulls a new segment of the continuous tubular member around the toilet-seat. In both of these references, the cover is introduced from the back edge and proceeds around the front of the seat to the opposite rear edge of the seat. In addition, both the Asberg and Hefty et al. covers are continuous so that they may be wound around the seat from the supply reel to the take-up reel. These references involve a substantial investment in the mechanisms and in the continuous threading of the reels in order for the inventions to work as they are designed.

Documents WO 8810086 A1 and WO 9938427 A disclose a toilet-seat sanitary protector changer comprising a continuous strip of sanitary protective covers that is moved across the toilet-seat from a supply assembly to a take-up assembly.

Thus, it can be seen that a need continues to exist for a toilet-seat cover that avoids the disadvantage of the known prior art. It is to this need that the present invention is addressed.

It is therefore, one of the principal objects of the present invention to provide a toilet-seat cover that is easily and quickly applied and which is easily disposed after use.

A further object of the present invention is to provide a toilet-seat cover that is inexpensive to produce and to use.

A still further object of the present invention is to provide a toilet-seat cover designed for a single-use application and which is conveniently stored, preferably utilizing a roll upon which the product is wound.

Other objects and advantages of the invention will become apparent as the description proceeds.

### Summary of the Invention

The present invention relates to a device for automatically providing a disposable seating-surface cover for a toilet-seat according to claim 1.

According to an embodiment of the invention, the rotational mechanism includes a cylindrical member driven by a motor that turns said cylindrical member, and on which said disposable seating-surface covers are wrapped around when said cylindrical member turns.

The present invention is to be used with a disposable seating-surface cover roll, wherein said roll is a long strip of made of at least one layer, wherein the strip comprises plurality of similar apertures, each of which defines an individual seating-surface cover. According to an embodiment of the invention the strip is wrapped around a cylindrical core.

According to an embodiment of the invention the initial edge of the strip includes an engaging member, such as a rod.

### Brief Description of the Drawings

In the drawings:
- Fig. 1 schematically illustrates a perspective view of device for providing a disposable seating-surface cover for a toilet-seat, according to an embodiment of the invention;
- Fig. 2 schematically illustrates a side view of the device of Fig. 1;
- Fig. 3 schematically illustrates a bottom view of the device of Fig. 1;
- Figs. 4-6 schematically illustrate an exemplary installation of the device of Fig. 1 in a toilet, according to an embodiment of the invention;
- Fig. 7A schematically illustrates a perspective view of a feeding process of the disposable seating-surface cover;
- Fig. 7B schematically illustrates a top view of the feeding process of Fig. 7A;
- Fig. 8A schematically illustrates a roll of disposable seating-surface cover and a corresponding rotational mechanism without their housing, according to an embodiment of the invention;
- Fig. 8B schematically illustrates a roll of disposable seating-surface cover and a corresponding rotational mechanism in their housing, according to an embodiment of the invention;
- Fig. 9A schematically illustrates a top view of conventional toilet module without the toilet-seat flap and lid;
- Figs. 9B and 9C schematically illustrate a bracket arrangement attached to the toilet of Fig. 9A for allowing the installation of the device of Fig. 1 directly to the toilet module, according to an embodiment of the invention;
- Figs. 10-12 show an exemplary installation of device 10 to a toilet module, according to an embodiment of the present invention; and
- Figs. 13-14 show device 10 provided with a lifting arm and installed on a toilet-seat, according to an embodiment of the invention; and
- Fig. 15 schematically illustrates a lifting arm, according to an embodiment of the invention.

### Detailed Description of the Invention

Reference will now be made to several embodiments of the present invention, examples of which are illustrated in the accompanying figures. Wherever practicable similar or like reference numbers may be used in the figures and may indicate similar or like functionality. The figures depict embodiments of the present invention for purposes of illustration only. One skilled in the art will readily recognize from the following description that alternative embodiments of the structures and methods illustrated herein may be employed without departing from the principles of the invention described herein.

The terms, "for example", "e.g.", "optionally", as used herein, are intended to be used to introduce non-limiting examples. While certain references are made to certain example components, other components can be used as well and/or the example components can be combined into fewer components and/or divided into further components.

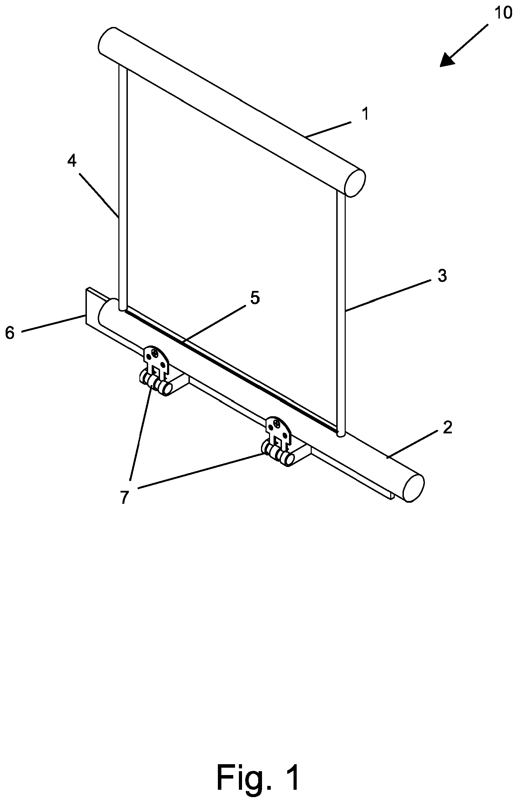

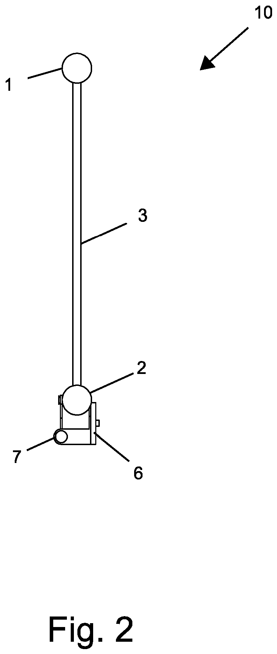

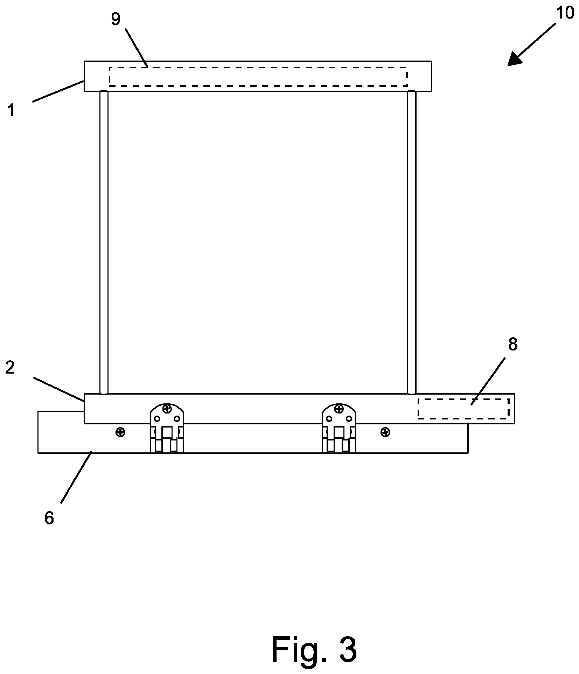

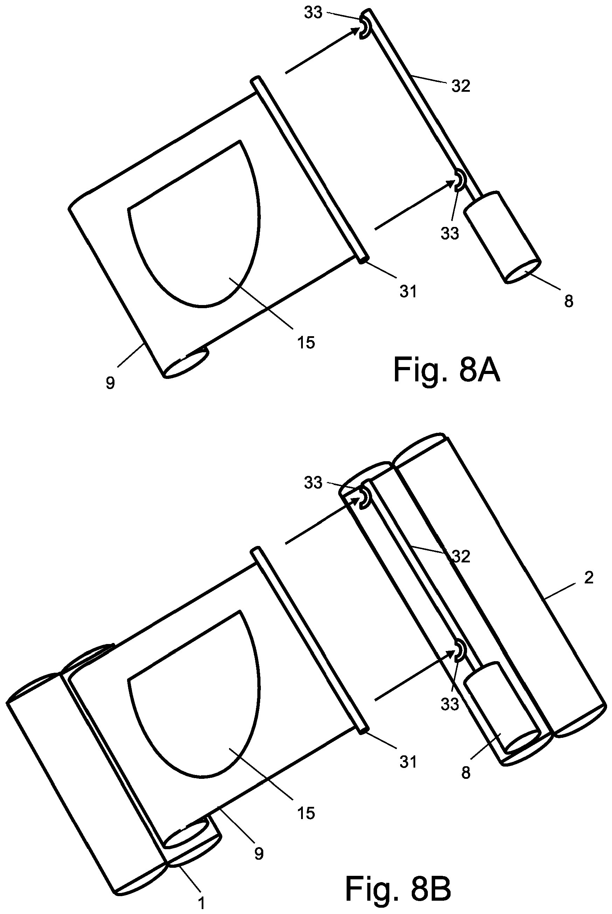

Figs. 1-3 show a device according to the invention. The device illustrated in this figure is particularly convenient because it can be applied as an ad-on device to existing toilet-seats without the need to carry out major alterations in the structure. The device generally indicated by numeral 10 in the figure comprises a feeding housing 1, a receiving housing 2, arms 3 and 4 for physically connecting between housing 1 and housing 2 and for supporting the feeding of disposable seating-surface covers from housing 1 into housing 2. A rotational mechanism, driven by a motor 8 (as indicated by the dotted square in Fig. 3), is situated in housing 2, and is adapted to pull the disposable seating-surface covers from a disposable seating-surface cover roll 9 located within housing 1 (as indicated by the dotted rectangular in Fig. 3). For example, the rotational mechanism may include a cylindrical member 32 (see Figs. 8A and 8B) or an elongated rod attached from one of its ends to motor 8, and on which the pulled disposable seating-surface covers are wrapped around while motor 8 turns that cylindrical member.

Referring now to Figs. 8A and 8B, in order to allow the rotational mechanism to pull the disposable seating-surface cover from roll 9, the initial edge of roll 9 is attached to the cylindrical member by any suitable securing or engaging means. According to an embodiment of the invention, the edge of the disposable seating-surface cover may include an engaging rod 31 and the cylindrical member 32 (that is located at housing 2) may include a corresponding clip member(s) 33 adapted to secure the engaging rod 31 to the cylindrical member 32, such that each turning of the cylindrical member 32 will pull the disposable seating-surface cover from housing 1 into housing 2. In such arrangement, the disposable seating-surface cover moves like a one-way conveyer. Fig. 8A shows the rotational mechanism and the disposable seating-surface cover from roll without their housings. Fig. 8B shows the rotational mechanism accommodated in housing 2 and the disposable seating-surface cover accommodated in housing 1. Both housing 1 and 2 are shown in their opened state allowing the insertion of roll 9 into housing 1 or the extraction of roll 9 from housing 2. In this exemplary embodiment, both housing 1, 2 having a cylindrical form which opens in a clamshell manner. As will be appreciated by a person skilled in the art, other forms (e.g., rectangular box) and opening arrangements can also be utilized for housing 1, 2.

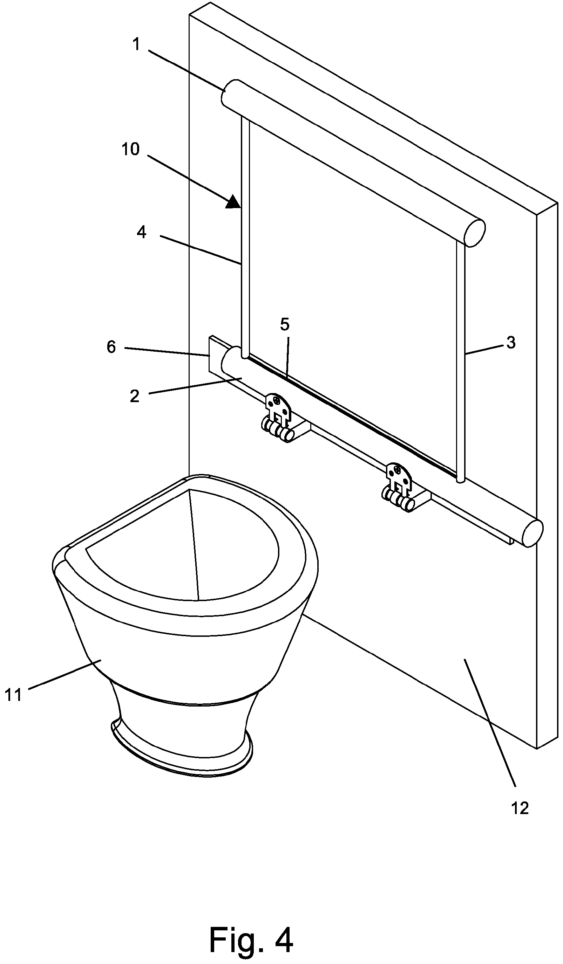

Mounting means, e.g., as indicated by mounting adapter 6 and hinges 7, can be used to install device 10 such that it can be used with a toilet module, as will be described in further details with respect to Figs. 4-6 hereinafter.

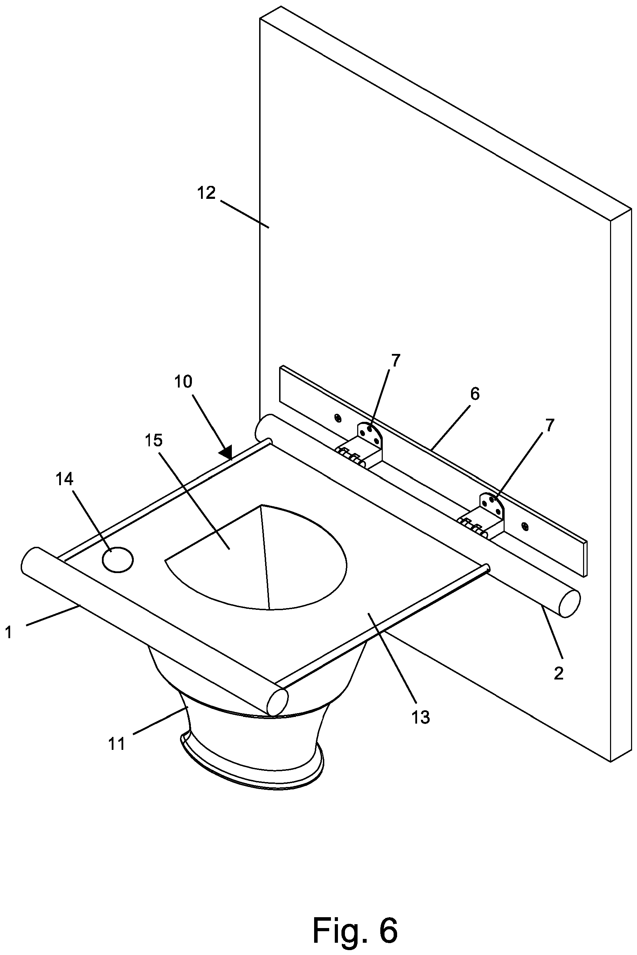

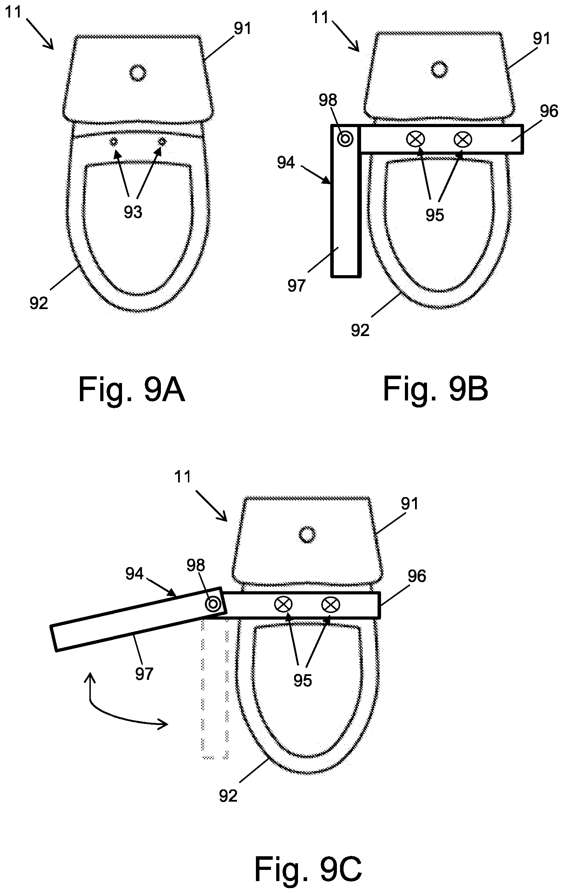

As shown in Figs. 4-6, device 10 is mounted (via the mounting means) on a wall 12 adjacent to a toilet module 11 so as to be foldable between a closed state (i.e., ready for use) and an open state. Alternatively, device 10 can be mounted directly to the toilet module 11 as will be described hereinafter with respect to Figs. 9A and 9B. In Fig. 4, device 10 is shown in its open state, whereas in Fig. 6 device 10 is represented in its closed state. For example, when mounting device 10 on a wall, the mounting adapter 6 may include telescopic arms or other adjusting arrangement adapted to accurately fit device 10 to a nearby toilet module (due to a gap between the wall and the location of the toilet-seat, which is usually different from one toilet room constellation to another).

Toilet module 11 may comprise common toilets elements such as a toilet-seat flap 16, a toilet lid (not shown), a water tank (not shown), etc. The toilet-seat flap 16 has a seating surface and it is generally constructed as a seating ring, in which case there is understood to be, under said seating ring, a surface with an aperture 17 (a hole or a clearance). The toilet-seat flap 16 is usually produced from a plastic which is hypoallergenic, washable and so stable that said toilet-seat flap 16 withstands the load constituted by a user who is sitting on it.

The toilet-seat flap 16 has a substantially rounded outer periphery. The aperture 17 has a substantially elliptical inner periphery. The center of the surface described by the inner periphery of aperture 17 and the center of the surface described by the outer periphery of toilet-seat flap 16 are located substantially concentrically in relation to one another.

Each individual disposable seating-surface cover 13 of roll 9 (see Fig. 6) is adapted to cover the seating surface of the toilet-seat flap 16 in order to avoid contact between a user and said toilet-seat flap 16. In a state of use, said individual disposable seating-surface cover 13 covers the seating surface of the toilet-seat flap 16 in such a way that, when sitting on the seating surface of the toilet-seat flap 16, a user has no direct contact of any kind with the toilet-seat flap 16 itself via his or her buttocks. When the disposable seating-surface cover 13 is in the state of use, it is suitable for use by a user and lies directly on the seating surface of the toilet-seat flap 16 in un-deformed, flat and smoothly stretched manner (see Fig. 6). The state of use of the disposable seating-surface cover 13 may be understood to be a position of use and an orientation of use of said cover.

According to an embodiment of the invention, roll 9 is a long strip of plastic, nylon or other suitable material(s) to keep germs and wetness away. For example, the strip can be a soft non-woven fabric for comfort, coated with a layer of plastic that are wrapped around a cylindrical core. Roll 9 is adapted to be stored in the feeding housing 1 (i.e., the dispensing side). The strip comprises plurality of similar apertures (e.g., as indicated by numeral 15 in Fig. 6), each of which defines an individual seating-surface cover 13. The rotational mechanism adapted to pull each single seating surface cover at a time, either by automatically detecting a user that has finished using the toilet or by manually activating the motor (e.g., via a dedicated control button or a triggering arrangement).

The surface area of each defined single seating-surface cover is equal to the seating surface, which is to be covered for hygiene purposes, of the toilet-seat flap 16. The disposable seating-surface cover 13 has a substantially rectangular outer periphery and the aperture that defines each single cover has a substantially elliptical inner periphery. The center of the surface area described by the inner periphery and the center of the surface area described by the outer periphery are located substantially concentrically in relation to one another.

The geometry/shape of each individual seating-surface cover 13 is adapted to the geometry/shape of toilet-seat flap 16 in such a way that said individual seating-surface cover 13 completely covers the seating surface of said toilet-seat flap 16. Furthermore, the aperture 15 is adapted in its size, position and orientation, when the disposable seating-surface cover 13 is in the state of use, to the aperture 17 in the toilet-seat flap 16.

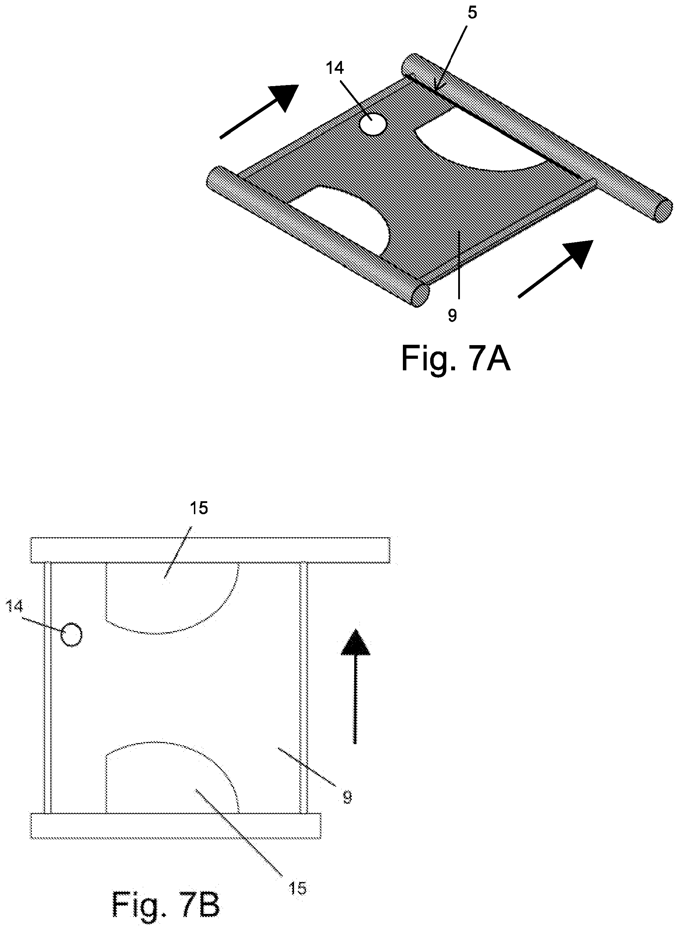

Device 10 operates as a conveying apparatus that is adapted to convey a portion of roll 9 that defines the disposable seating-surface cover 13 onto the seating surface of the toilet-seat flap 16. In doing so, device 10 slides each single defined disposable seating-surface cover 13, as represented by the black arrows in Figs. 7A and 7B, and deposits said disposable seating-surface cover 13 on the seating surface in its state of use. Motor 8 operates for the purpose of conveying said disposable seating-surface cover 13. The motor 8 drives roll 9 in such a way that each individual disposable seating-surface cover 13 follows a preset displacing movement. Device 10 therefore transfers the disposable seating-surface cover 13 from its storage state into its state of use and then to its collection state. Upon completing using the entire disposable seating-surface covers 13, roll 9 is collected at the receiving housing 2, i.e., wrapped around cylindrical member 32 (see Figs. 8A and 8B).

Device 10 also comprises the two supporting rails 3 and 4. Said rails run parallel to one another and extend substantially parallel to the seating surface of the toilet-seat flap 16. With the aid of the rails 3 and 4 the disposable seating-surface cover 13 is mounted so as to be displaceable along said rails 3, 4. Under these circumstances, the feeding of the covers 13 can be easily conveyed forward to the receiving housing 2. In a receiving state, housing 2 collects/receives the disposable seating-surface cover 13. In the course of the conveying operation, the feeding process in (see Figs. 7A and 7B) describes a displacement that follows a straight path. There is therefore substantially a parallel displacement of the disposable seating-surface cover 13 relative to the toilet-seat flap 16.

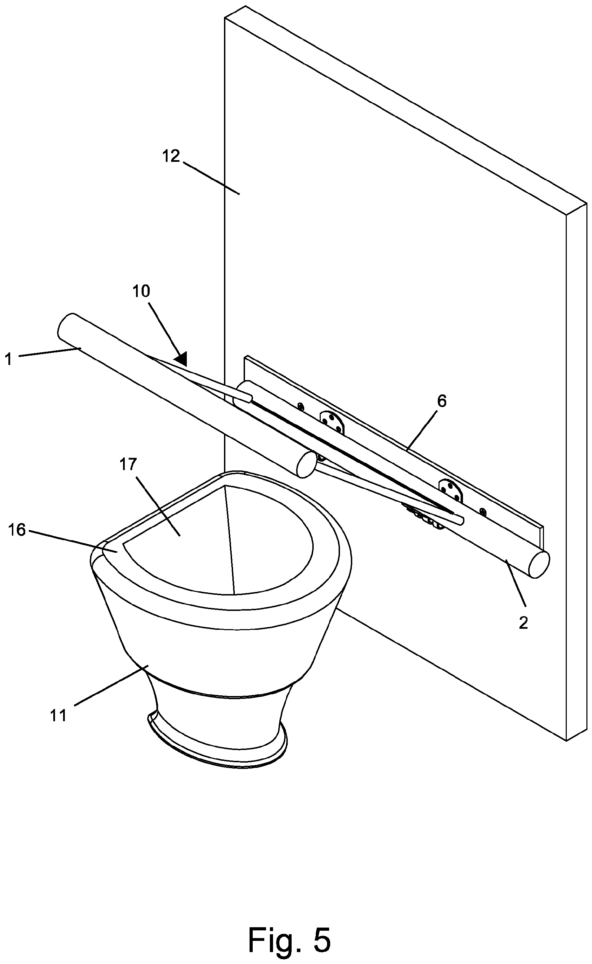

It can also be seen in Figs. 5 and 7A, that housing 2 has a receiving slit 5. Device 10 is adapted to convey the disposable seating-surface cover 13 out of the housing 1 through the receiving slit 5 and onto the cylindrical member 32 (Figs. 8A and 8B).

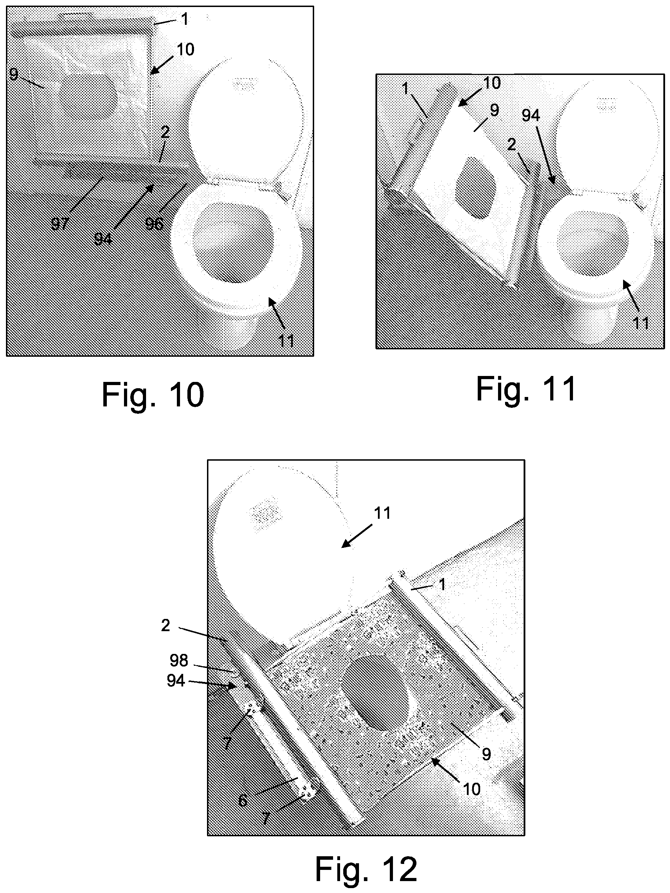

Fig. 9A schematically illustrates a top view of a conventional toilet module 11. Toilet module 11 includes a water tank 91, a toilet-seat base 92 and two holes 93 located on base 92 that are usually used for attaching a corresponding set of a toilet-seat flap and a lid (not shown), to base 92. Figs. 9B and 9C schematically illustrate a bracket arrangement 94 attached to base 92 of toilet module 11 of Fig. 9A via holes 93, e.g., using corresponding screws 95 or other tightening means. Bracket arrangement 94 has an essentially "L" like shape that is defined by two arms 96 and 97. In some embodiments, arms 96 and 97 are pivotally connected via an axis 98, thereby allowing device 10 to pivot away from the toilet-seat (see Fig. 9C and Fig. 10) when device 10 is not in use, e.g., when cleaning the toilet. In this figure, arm 96 is attached to base 92 (using screws 95) and arm 97 is used for installing device 10 on top of it similar to the wall installation described hereinabove e.g., using the mounting adapter 6 (see Fig. 12). Such installation does not require any walls or surface to be located adjacent to the toilet module 11. The set of the toilet-seat flap and a lid can be also so attached on top of arm 96 of said bracket arrangement 94 using the same screws 95 (see Figs. 10-12). Figs. 10-12 show an exemplary installation of device 10 to toilet module 11 using the bracket arrangement 94 described hereinabove.

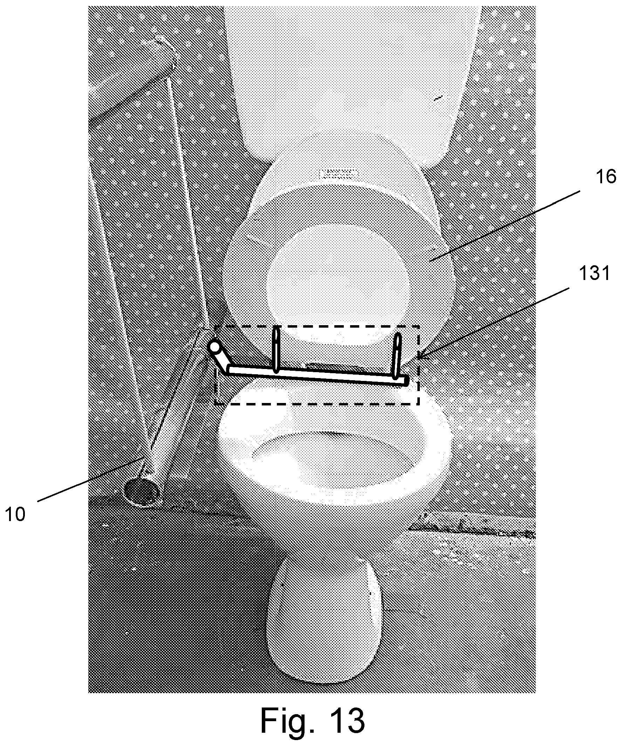

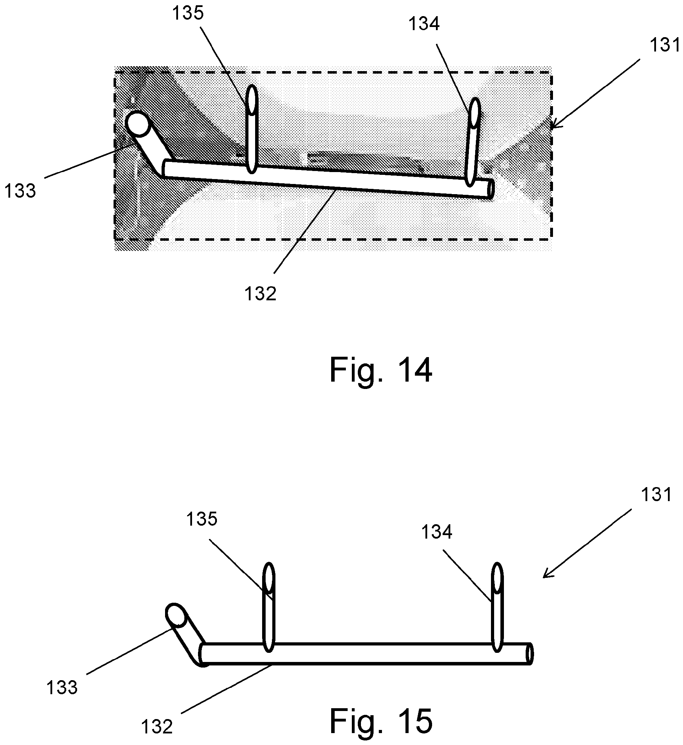

Referring now to Figs. 13-15, according to the invention, device 10 comprises a toilet-seat flap lifting arm 131. Lifting arm 131 is configured to lift the toilet-seat flap 16 when device 10 is not in use (i.e., in an open state) and *vice versa.* Lifting arm 131 can be an integral part of device 10 and may be operated automatically when device 10 is foldable between a closed state (i.e., ready for use) and an open state. For example, lifting arm 131 can be connected to the bracket arrangement 94 in such way that it will transmit the force from the lifting of device 10 (to an open state) to the lifting arm 131 to form a lever point (e.g., at the bottom of toilet-seat flap 16, as shown in the Figs. 14). Alternatively, lifting arm 131 can be part of an independent lifting mechanism operated either manually (e.g., by foot pedal mechanism) or automatically (e.g., by an electric motor).

Fig. 15 schematically illustrates a lifting arm 131, according to an embodiment of the invention. Lifting arm 131 comprises a rotatable base bar 132, a handle 133 and one or more upright lifting arms as indicated by numerals 134 and 135. Handle 133 can be connected to an actuating mechanism such as bracket arrangement 94 of device 10 or to an external mechanism such as foot operated pedal. Upon applying an actuating force by the actuating mechanism, handle 133 forces the rotatable base bar 132 to move and to transmit the actuating force to toilet-seat flap via the physical contact of the upright lifting arms 134 and 135 with the toilet-seat flap.

According to an embodiment of the invention, a toilet-seat flap and a toilet lid can be an integrated part of device 10, such that an installation of device 10 will also provide the toilet-seat flap and the toilet lid. For example, such an arrangement can be used as a kit for replacing an existing toilet-seat flap and lid.

According to an embodiment of the present invention, the triggering arrangement is adapted to control the conveying of the disposable seating-surface cover 13. On receiving a triggering signal, device10 brings about a transfer of each defined disposable seating-surface cover 13 from its storage state into its state of use. For example, a control indication 14, e.g., in from of at least one aperture or at least one printed sign on cover 13, can be located adjacent to each aperture 15 in order to define a single cover at the disposable seating-surface cover 13. Control indication 14 can be used to indicate when to stop the feeding process (e.g., the rotation of motor 8). According to the invention, an optical reader located at housing 2 and/or 3 can be configured to capture visual information (i.e., an image) of control indication 14 and to translate the image into digital information that reflects the triggering signal (i.e., when to stop the feeding of cover 13). As will be appreciated by a person skilled in the art, the feeding process can be applied by using electronic, kinematic, hydraulic and/or pneumatic construction.

As will be appreciated by the skilled person the arrangement described in the figures results in an automatic system for providing a disposable seating-surface cover for a toilet-seat, that is easily and quickly applied and which is easily disposed after use. While an embodiment of a disposable toilet-seat cover and modifications thereof have been shown and described in detail herein, various additional changes and modifications may be made without departing from the scope of the present invention as defined in the appended claims.

## Claims

1. A device (10) for automatically providing a disposable seating-surface cover for a toilet-seat, comprising:
a) a first housing (1) adapted to feed a disposable seating-surface cover roll (9) installed therein, wherein said cover roll (9) is a long strip layer that comprises plurality of similar apertures (17) and a control indication (14) located adjacent to each aperture (17), so that each aperture (17) defines an individual seating-surface cover (13);
b) a second housing (2) adapted to receive and collect the roll (9) by connecting an initial edge of said roll (9) to a rotational mechanism situated in said second housing (2) and equipped with a motor (8), said rotational mechanism is adapted to pull said roll (9) such that each individual disposable seating-surface cover (13) follows a preset displacing movement where one individual disposable seating-surface cover (13) is positioned in a state of use, wherein when an individual seating-surface cover (13) of the roll (9) is in a state of use, it lies directly on a seating surface of a toilet-seat, such that the aperture (17) of the individual seating-surface cover (13) is parallel to an aperture of said toilet-seat, wherein said first and second housings are physically connected by supporting rails or arms (3, 4);
c) an optical reader located at said first housing (1) and/or said second housing (2), wherein said optical reader is configured to capture visual information of said control indication (14) and to translate the captured visual information into digital information that reflects a triggering signal that indicates when to stop the feeding process of said cover through the stopping of the motor, as to enable the preset displacing movement;
d) a bracket arrangement (94) adapted to install said device (10) to said toilet-seat in a way that allows said device to pivot away from said toilet-seat when said device is not in use; and
e) a lifting arm (131) for enabling a hands-free lifting/lowering of a toilet-seat flap (16) of the toilet-seat.

2. A device (10) according to claim 1, in which the rotational mechanism includes a cylindrical member (32) driven by said motor that turns said cylindrical member (32), and on which said disposable seating-surface covers are wrapped around when said cylindrical member (32) turns.

3. A device (10) according to claim 1, further comprising a toilet-seat flap (16) and a toilet lid, thereby providing a toilet-seat kit with the disposable seating-surface cover.

4. A device (10) according to claim 1, in which the control indication (14) is at least one sign printed on each individual disposable seating-surface cover (13).

5. A device (10) according to claim 1, in which the disposable seating surface cover roll (9) includes an engaging member (31) and the second housing (2) includes a corresponding clip member(s) (33) adapted to secure the engaging member (31) to the cylindrical member (32), such that each turning of the cylindrical member (32) will pull the disposable seating surface cover from the first housing (1) into said second housing (2).

## Patentansprüche

1. Vorrichtung (10) zum automatischen Bereitstellen einer Einweg-Sitzflächenabdeckung für einen Toilettensitz, die umfasst:
a) ein erstes Gehäuse (1), das geeignet ist, eine darin installierte Einweg-Sitzflächenabdeckungsrolle (9) zuzuführen, wobei die Abdeckungsrolle (9) eine lange Streifenschicht ist, die eine Vielzahl von ähnlichen Öffnungen (17) und eine Kontrollanzeige (14) aufweist, die neben jeder Öffnung (17) angeordnet ist, so dass jede Öffnung (17) eine individuelle Sitzflächenabdeckung (13) definiert;
b) ein zweites Gehäuse (2), das geeignet ist, die Rolle (9) aufzunehmen und zu sammeln, indem eine Anfangskante der Rolle (9) mit einem Drehmechanismus verbunden wird, der sich in dem zweiten Gehäuse (2) befindet und mit einem Motor (8) ausgestattet ist, wobei der Drehmechanismus geeignet ist, die Rolle (9) so zu ziehen, dass jede einzelne Einweg-Sitzflächenabdeckung (13) einer voreingestellten Verschiebungsbewegung folgt, bei der eine einzelne Einweg-Sitzflächenabdeckung (13) in einem Gebrauchszustand positioniert ist, wobei eine einzelne Sitzflächenabdeckung (13) der Rolle (9), wenn sie sich in einem Gebrauchszustand befindet, direkt auf einer Sitzfläche eines Toilettensitzes liegt, so dass die Öffnung (17) der einzelnen Sitzflächenabdeckung (13) parallel zu einer Öffnung des Toilettensitzes ist, wobei das erste und das zweite Gehäuse durch Stützschienen oder Arme (3, 4) physisch verbunden sind;
c) ein optisches Lesegerät, das an dem ersten Gehäuse (1) und/oder dem zweiten Gehäuse (2) angeordnet ist, wobei das optische Lesegerät so konfiguriert ist, dass es visuelle Informationen der Kontrollanzeige (14) erfasst und die erfassten visuellen Informationen in digitale Informationen übersetzt, die ein Auslösesignal widerspiegeln, das anzeigt, wann der Zuführprozess der Abdeckung durch das Anhalten des Motors zu stoppen ist, um die voreingestellte Verschiebebewegung zu ermöglichen;
d) eine Halterungsanordnung (94), die geeignet ist, die Vorrichtung (10) an dem Toilettensitz so zu installieren, dass die Vorrichtung von dem Toilettensitz weggeschwenkt werden kann, wenn die Vorrichtung nicht in Gebrauch ist; und
e) einen Hebearm (131) zum Ermöglichen eines handfreien Anhebens/Absenkens eines Toilettensitzdeckels (16) des Toilettensitzes.

2. Vorrichtung (10) nach Anspruch 1, bei der der Drehmechanismus ein zylindrisches Element (32) umfasst, das von dem Motor angetrieben wird, der das zylindrische Element (32) dreht, und um das die Einweg-Sitzflächenabdeckungen gewickelt werden, wenn sich das zylindrische Element (32) dreht.

3. Vorrichtung (10) nach Anspruch 1, die ferner einen Toilettensitzdeckel (16) und einen Toilettendeckel umfasst, wodurch ein Toilettensitz-Set mit dem Einweg-Sitzflächenbezug bereitgestellt wird.

4. Vorrichtung (10) nach Anspruch 1, bei der die Kontrollanzeige (14) mindestens ein auf jede einzelne Einweg-Sitzflächenabdeckung (13) aufgedrucktes Zeichen ist.

5. Vorrichtung (10) nach Anspruch 1, bei der die Einweg-Sitzflächenabdeckungsrolle (9) ein Eingriffselement (31) aufweist und das zweite Gehäuse (2) ein entsprechendes Klemmelement (33) aufweist, das geeignet ist, das Eingriffselement (31) an dem zylindrischen Element (32) zu befestigen, so dass jede Drehung des zylindrischen Elements (32) die Einweg-Sitzflächenabdeckung aus dem ersten Gehäuse (1) in das zweite Gehäuse (2) zieht.

## Revendications

1. Un dispositif (10) pour fournir automatiquement un revêtement jetable de surface d'assise pour un siège de toilette, comprenant :
a) un premier logement (1) adapté pour alimenter un rouleau de revêtement de surface d'assise jetable (9) installé à l'intérieur, dans lequel ledit rouleau de revêtement (9) est une longue couche de bande qui comprend une pluralité d'ouvertures similaires (17) et une indication de contrôle (14) située à côté de chaque ouverture (17), de sorte que chaque ouverture (17) définit un revêtement de surface d'assise individuel (13) ;
b) un second logement (2) adapté pour recevoir et collecter le rouleau (9) en connectant un bord initial dudit rouleau (9) à un mécanisme rotatif situé dans ledit second logement (2) et équipé d'un moteur (8), ledit mécanisme rotatif étant adapté pour tirer ledit rouleau (9) de manière à ce que chaque revêtement de surface d'assise jetable individuel (13) suit un mouvement de déplacement prédéfini lorsqu'un revêtement de surface d'assise jetable individuel (13) est positionné dans un état d'utilisation, dans lequel lorsqu'un revêtement de surface d'assise individuel (13) du rouleau (9) est dans un état d'utilisation, il repose directement sur une surface d'assise d'un siège de toilette, de telle sorte que l'ouverture (17) du revêtement de surface d'assise individuel (13) est parallèle à une ouverture dudit siège de toilette, dans lequel lesdits premier et second logements sont physiquement reliés par des rails ou des bras de support (3, 4) ;
c) un lecteur optique situé au niveau dudit premier logement (1) et/ou dudit second logement (2), dans lequel ledit lecteur optique est configuré pour capturer les informations visuelles de ladite indication de contrôle (14) et pour traduire les informations visuelles capturées en informations numériques reflétant un signal de déclenchement qui indique quand arrêter le processus d'alimentation dudit revêtement par l'arrêt du moteur, de manière à permettre le mouvement de déplacement prédéfini ;
d) un dispositif de support (94) adapté pour installer ledit dispositif (10) sur ledit siège de toilette de manière à permettre à ce dispositif de pivoter à l'écart dudit siège de toilette lorsque ledit dispositif n'est pas utilisé ; et
e) un bras de levage (131) permettant de soulever/abaisser sans les mains un abattant de siège de toilette (16) du siège des toilettes.

2. Un dispositif (10) selon la revendication 1, dans lequel le mécanisme de rotation comprend un élément cylindrique (32) entraîné par ledit moteur qui fait tourner ledit élément cylindrique (32), et sur lequel lesdits revêtements jetables de la surface d'assise sont enroulés lorsque ledit élément cylindrique (32) tourne.

3. Un dispositif (10) selon la revendication 1, comprenant en outre un abattant de siège de toilette (16) et un couvercle de toilette, fournissant ainsi un kit de siège de toilette avec le revêtement jetable de la surface d'assise.

4. Un dispositif (10) selon la revendication 1, dans lequel l'indication de contrôle (14) est au moins un signe imprimé sur chaque revêtement de surface d'assise jetable (13).

5. Un dispositif (10) selon la revendication 1, dans lequel le rouleau de revêtement de la surface d'assise jetable (9) comprend un élément d'engagement (31) et le second logement (2) comprend un (des) élément(s) de fixation correspondant(s) (33) adapté(s) pour fixer l'élément d'engagement (31) à l'élément cylindrique (32), de sorte que chaque rotation de l'élément cylindrique (32) tire le revêtement de surface d'assise jetable du premier logement (1) dans ledit second logement (2).
